# EUROPEAN PATENT APPLICATION

(11) **EP 2 789 709 A1**
(43) Date of publication of application: **15.10.2014**
(21) Application number: 12854746.0
(22) Date of filing: 29.11.2012
(51) Int. Cl.: C22C 38/00, C21D 1/06, C21D 9/40, C22C 38/44, F16C 19/04, F16C 33/62, F16C 33/64

(54) **ROLLING BEARING AND METHOD FOR PRODUCING SAME**

(30) Priority: 06.12.2011 JP 2011266535
(71) Applicant: NSK Ltd., Tokyo 141-8560 (JP)
(72) Inventor: YAMADA , Hiroki, Kanagawa 251-8501 (JP); UYAMA , Hideyuki, Kanagawa 251-8501 (JP); TSUTSUMI , Masako, Kanagawa 251-8501 (JP); MORITO,Yusuke, Kanagawa 251-8501 (JP)
(74) Representative: Grünecker, Kinkeldey, Stockmair & Schwanhäusser
(86) International application number: PCT/JP2012/080995
(87) International publication number: WO 2013/084800

(57) **Abstract**

After carburizing or carbonitriding and before quenching and tempering, there is provided a step of furnace cooling and retaining a rolling bearing part at a temperature of 620 to 700°C for a predetermined time, whereby, on the contact surface of the rolling bearing part made of alloy steel containing appropriate amounts of Cr and Mo, the C+N content is 0.9 to 1.4 mass % and the area ratio of carbide is 10% or less, and at the depth of 1% of the diameter of the rolling element from the contact surface, the hardness is 720 to 832 in Hv, the amount of retained austenite is 20 to 45 volume %, and the compressive residual stress is 50 to 300 Mpa, and at the depth of 1 to 3% of the diameter of the rolling element from the contact surface, the average value of the prior austenite grain size is 20 µm or less and the maximum value of the prior austenite grain size is 3 times or less the average value, and the hardness of the core portion is 400 to 550 in Hv.

## Description

### Technical Field

The present invention relates to a rolling bearing, and particularly, to a relatively large rolling bearing for use in supporting, for example, rotation shafts of wind power generators, construction machines and industrial robots.

### Background Art

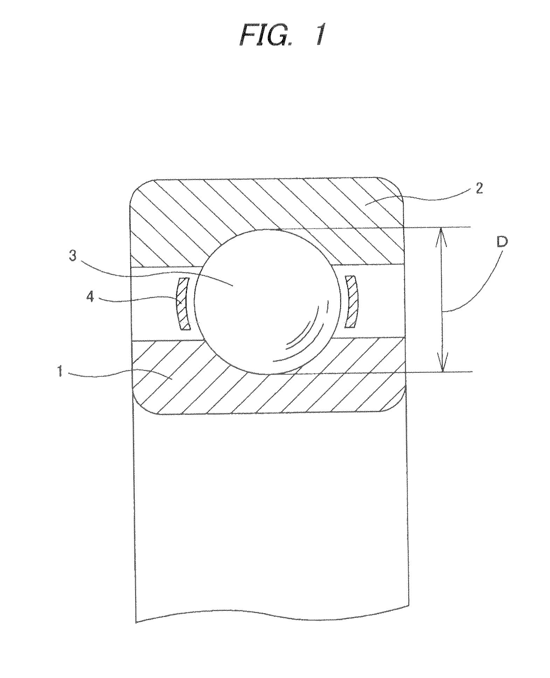

In the rotation support sections of the rotation shafts of various rotating machine apparatuses, such as the main shaft and the speed changer of a power generation wind turbine of a wind power generator, and the rotation shafts of various rotating machine apparatuses, such as the axles of a construction machine and a speed changer of a construction machine or an industrial robot, rolling bearings are provided to rotatably support these rotating members. As shown in FIG. 1, the rolling bearing basically includes an inner ring 1 having an inner ring raceway on the outer circumferential surface thereof, an outer ring 2 having an inner ring raceway on the inner circumferential surface thereof, rolling elements 3 provided between the inner ring raceway and the outer ring raceway, and a retainer 4 for rotatably supporting the rolling elements 3. In the example shown in the figure, a deep groove radial ball bearing is shown and balls are used as the rolling elements 3; however, in the case that a larger radial load is applied, a radial tapered roller bearing or a radial cylindrical roller bearing respectively incorporating tapered rollers or cylindrical rollers as rolling elements is used in some cases.

When a rolling bearing is used in a loaded state for a long time, metal fatigue occurs, whereby flaking occurs on the raceway surfaces and the rolling contact surfaces thereof in some cases. More specifically, internal starting point type flaking in which fatigue cracking occurs from nonmetallic inclusions, such as oxides, sulfides, nitrides and carbides, forming alloy steel and results in flaking is known, and indentation start point type flaking in which fatigue cracking occurs staring from an indentation formed on the raceway surface due to the mixture of foreign substances in lubricating oil and results in flaking is also known.

Furthermore, in some uses in which operating conditions are severe, structure change type flaking in which the metal structure of the matrix itself of alloy steel forming a rolling bearing changes from martensite structure to fine ferrite grains referred to as white structure and fatigue cracking occurs staring from the structure change portion and results in flaking is also known. Although the cause of the structure change type flaking has not been clarified fully, it is assumed that hydrogen generated by the decomposition of a lubricant penetrates into steel and causes hydrogen brittleness, whereby the occurrence of structure change is accelerated and results in flaking.

As disclosed in Cited Documents 1 and 2, a measure for the above-mentioned structure change caused by hydrogen has been proposed in which, instead of lubricating oil, grease is used as a lubricant to be sealed in a bearing and this grease is improved to extend the life of a rolling bearing.

However, depending on the use of a rolling bearing, lubricating oil is used instead of grease as a lubricant in some cases. In particular, for relatively large rolling bearings, lubricating oil is used more frequently than grease. The measure for the structure change type flaking through the improvement of grease cannot be applied to such a rolling bearing in which lubricating oil is used as a lubricant as described above.

Furthermore, as disclosed in Cited Document 3, a measure has been proposed in which the structure change type flaking due to hydrogen is delayed by using alloy steel obtained by subjecting steel added with large amounts of Cr and Mo to carburizing or carbonitriding.

However, if the addition amounts of such elements as Cr and Mo increase, the cost of the alloy steel itself rises and its toughness is liable to be reduced. For this reason, the cost of the alloy steel is apt to directly lead to the cost of a product, and there is a problem that this technology cannot be applied to relatively large rolling bearings that are required to have high toughness.

Under these circumstances, the inventors have made a proposal as described in Cited Document 4 in which the amounts of Cr and Mo in alloy steel are made appropriate, and the alloy steel is carburized or carbonitrided and is further quenched and tempered so that the amounts of C + N, the hardness and the amount of retained austenite at the depth of 1% of the diameter of a rolling element from the surface contacting the counterpart surface during operation in an inner ring, an outer ring or rolling elements, that is, the inner ring raceway of the inner ring, the outer ring raceway of the outer ring and the rolling surfaces of the rolling elements, are regulated, whereby hydrogen brittleness resistance is improved, the structure change due to hydrogen is delayed, hydrogen is trapped by carbides, carbonitrides and retained austenite in the surface layer portion; consequently, the occurrence of the structure change is suppressed effectively. With the present invention, the hardness in the core portion is suppressed to improve toughness so that both the suppression of the occurrence of the structure change and the toughness are achieved; however, further improvement of these characteristics is required.

### Prior Art Documents

### Patent Documents

Patent Document 1: JP 2002-327758 A
Patent Document 2: JP 2003-106338 A
Patent Document 3: JP 2005-314794 A
Patent Document 4: JP 2010-196107 A

### Summary of Invention

### Problem to be Solved by Invention

In consideration of the above-mentioned circumstances, it is an object of the present invention to be able to sufficiently suppress the occurrence of the structure change and to provide high toughness so that the life of a relatively large rolling bearing in which lubricating oil is used as a lubricant is extended even under severe operating conditions.

### Means for Solving the Problem

The present invention relates to a rolling bearing having an inner ring, an outer ring and rolling elements provided therebetween in a rollable manner.

Specifically, according to the rolling bearing of the present invention,
at least one of the inner ring, the outer ring and the rolling elements is made of an alloy steel containing:
0.10 to 0.30 mass % of C, 0.2 to 0.5 mass % of Si, 0.2 to 1.2 mass % of Mn, 2.6 to 4.5 mass % of Cr, 0.1 to 0.4 mass % of Mo, 0.20 mass % or less of Ni, 0.20 mass % or less of Cu, 0.020 mass % or less of S, 0.020 mass % or less of P, and 12 mass ppm or less of O, the balance being Fe and inevitable impurities,
a surface thereof is carburized or carbonitrided, and C+N content on the surface that contacts a counterpart surface during operation is 0.9 to 1.4 mass %,
an area ratio of carbide on the contact surface is 10% or less,
at a depth of 1% of the diameter of the rolling element from the contact surface, the hardness is 720 to 832 in Hv, an amount of retained austenite is 20 to 45 volume %, and compressive residual stress is 50 to 300 Mpa,
at a depth of 1 to 3% of the diameter of the rolling element from the contact surface, an average value of prior austenite grain size is 20 µm or less, and the maximum value of the prior austenite grain size is 3 times or less the average value, and
the hardness of a core portion is 400 to 550 in Hv.

In addition to the features described above, in the at least one of the inner ring, the outer ring and the rolling elements, the number of oxide inclusions having a diameter of 10 µm or more and existing in an area of 320 mm² in a cut surface is preferably 10 or less. Further, C+N content at the depth of 1% of the diameter of the rolling element from the contact surface is preferably 0.7 to 1.3 mass %. Further, the surface roughness of the contact surface is preferably 1.4 µm or less at the maximum peak height (Rp) of the roughness curve of the surface.

The present invention is suitably applied, in particular, to a rolling bearing in which the diameter of the rolling element thereof is 30 mm or more. More specifically, the rolling bearing according to the present invention is favorably used as a large rolling bearing for supporting a main shaft of a power generation wind turbine of a wind power generator; as a rolling bearing for supporting a rotation shaft that is used to support a mechanism for transmitting power via gears, such as a speed changer of a wind power generator or a construction machine, and for supporting a rotation shaft, the direction of the torque exerted thereto being changed momentarily; and as a rolling bearing for supporting a rotation shaft, the rotation direction of the shaft being changed frequently, as in the case of the axles of a construction machine.

In the present invention, which of rolling bearing parts is configured according to the present invention is determined in consideration of bearing name number and operating conditions. In other words, it is sufficient to apply the present invention to a rolling bearing part that is most likely to cause flaking. However, the present invention can be applied to the other parts or all the parts.

The present invention also relates to a method of manufacturing a rolling bearing part, the rolling bearing having an inner ring, an outer ring and rolling elements provided therebetween in a rollable manner, and the rolling bearing part being at least one of the inner ring, the outer ring and the rolling elements.

Specifically, the manufacturing method according to the present invention includes, using, as an alloy steel forming the rolling bearing part, an alloy steel containing:
0.10 to 0.30 mass % of C, 0.2 to 0.5 mass % of Si, 0.2 to 1.2 mass % of Mn, 2.6 to 4.5 mass % of Cr, 0.1 to 0.4 mass % of Mo, 0.20 mass % or less of Ni, 0.20 mass % or less of Cu, 0.020 mass % or less of S, 0.020 mass % or less of P, and 12 mass ppm or less of O, the balance being Fe and inevitable impurities,
carburizing or carbonitriding the rolling bearing part at a temperature of 900 to 980°C for a predetermined time;
after the carburizing or the carbonitriding, furnace-cooling the rolling bearing part and retaining at a temperature of 620 to 700°C for a predetermined time; and
quenching and tempering the rolling bearing part,
whereby C+N content on a surface of the rolling bearing part contacting a counterpart surface during operation is 0.9 to 1.4 mass %, an area ratio of carbide on the contact surface is 10% or less, and an amount of retained austenite is 20 to 45 volume % at a depth of 1% of the diameter of the rolling element from the contact surface.

Further, the CP value inside a furnace during the carburizing or the carburizing is preferably 0.8 to 1.7.

### Effect of Invention

According to the present invention, in a process for producing at least one of rolling bearing parts, that is, the inner ring, the outer ring or the rolling elements, after the carburizing or the carbonitriding and before the quenching and the tempering, the rolling bearing part is furnace-cooled and retained at a temperature of 620 to 700°C for a predetermined time, whereby, with respect to the structure of the alloy steel, transformation treatment from austenite to cementite, perlite and ferrite is completed fully, and the prior austenite grain boundaries and the structure after the quenching are made uniform.

Consequently, with the present invention, the properties of the alloy steel at the contact surface, the surface layer portion and the core portion of the rolling bearing part can be controlled appropriately; as a result, both the suppression of the occurrence of the structure change type flaking and excellent fracture toughness can be attained at high levels.

### Brief Description of the Drawings

FIG. 1 is a partial vertical cross-sectional view illustrating a deep groove radial ball bearing covered by the present invention.

### Embodiments of Invention

The inventors have achieved the present invention based on the findings that, in at least one of an inner ring and an outer ring of a rolling bearing and rolling elements rollably provided therebetween, preferably the outer ring and the inner ring, more preferably all the parts, (1) the rolling fatigue life of the part can be improved by ingeniously adjusting the contents of composition elements in alloy steel, by controlling the amounts of oxide inclusions, by adjusting the surface roughness of the surface (raceway surface or rolling contact surface) contacting the counterpart surface during operation, by controlling the hardness, the amount of retained austenite, the compression residual stress, the prior austenite grain size and the amount of C and N at positions where structure change is apt to occur, and thereby delaying structure change due to hydrogen; (2) the toughness of the part can be improved by controlling the C+N content and the area ratio of carbides on the contact surface, the prior austenite grain size at a predetermined depth from the surface, and the hardness of the core portion; and (3) these properties of the rolling bearing can be attained by performing predetermined treatment between the process of carburizing treatment or carbonitriding treatment and the process of quenching and tempering for the above-mentioned part, and the inventors have completed the present invention. The above-mentioned characteristics of the present invention will be described below in detail.

[Composition Elements] The respective composition elements of alloy steel forming a rolling bearing according to the present invention and the critical significance of their contents will be described below.

[Content of Carbon] Carbon (C) is an element that is solid-soluble in the matrix structure of alloy steel by quenching and is used to improve the hardness of the alloy steel. The content of carbon is 0.10 to 0.30 mass %, preferably 0.16 to 0.28 mass %. If the content of carbon is less than 0.10 mass %, the hardness of the core portion of each part is insufficient and its rigidity is reduced. On the other hand, if the content of carbon is more than 0.30 mass %, the toughness of the core portion is reduced. When carburizing treatment or carbonitriding treatment is performed, the surface is hardened and the hardness is reduced toward the inside, and the portion in which the hardness is reduced fully and becomes constant is defined as the core portion.

[Content of Silicon] Silicon (Si) is an element that is solid-soluble in the matrix structure of alloy steel to improve quenching performance. Furthermore, silicon stabilizes martensite in the matrix structure, thereby delaying the structure change due to hydrogen and producing an effect of extending the life of each part. The content of silicon is 0.2 to 0.5 mass %, preferably 0.3 to 0.5 mass %. If the content of silicon is less than 0.2 mass %, the effect of delaying the structure change is not obtained sufficiently. On the other hand, if the content is more than 0.5 mass %, the carburizability and carbonitridability of the alloy steel are reduced in some case.

[Content of Manganese] Manganese (Mn) is an element that is solid-soluble in the matrix structure of alloy steel to improve quenching performance. Furthermore, manganese stabilizes martensite in the matrix structure, thereby delaying the structure change due to hydrogen and producing an effect of extending the life of each part. Furthermore, manganese produces an effect of facilitating the generation of retained austenite after heat treatment. The generated retained austenite delays the diffusion and accumulation of hydrogen in the alloy steel, thereby delaying the occurrence of local structure change and producing an effect of extending the life of each part.

The content of manganese is 0.2 to 1.2 mass %, preferably 0.6 to 1.2 mass %. If the content of manganese is less than 0.2 mass %, the above-mentioned effect of delaying the structure change is not obtained sufficiently. On the other hand, if the content is more than 1.2 mass %, the prior austenite grain size is coarsened or the amount of retained austenite becomes excessive, and the dimensional stability of each part is reduced. The content of manganese should be 0.6 mass % or more to stably obtain the effect of suppressing the structure change.

Since the prior austenite grain size tends to be coarsened in the case that the amount of manganese is high as described above, it is necessary to uniformly refine crystal grains by performing furnace cooling after carburizing treatment or carbonitriding treatment and by performing treatment in which each part is retained at a temperature of 620 to 700°C for a predetermined time as described later.

[Content of Chromium] Chromium (Cr) is an element that is solid-soluble in the matrix structure of alloy steel to improve quenching performance. Furthermore, chromium is combined with carbon to form carbide, thereby producing an effect of improving abrasion resistance, and chromium stabilizes carbide and martensite in the matrix structure, thereby delaying the structure change due to hydrogen and producing an effect of extending the life of each part.

The content of chromium is 2.6 to 4.5 mass %, preferably 2.6 to 3.5 mass %. If the content of chromium is less than 2.6 mass %, the above-mentioned effect of delaying the structure change is not obtained sufficiently. On the other hand, if the content is more than 4.5 mass %, the toughness of each part is reduced or the carburizability and carbonitridability of the steel alloy are reduced in some case. Furthermore, the cost of the material is increased, and the predetermined hardness of the material cannot be obtained unless quenching temperature is raised, whereby the productivity of each part is reduced eventually.

[Content of Molybdenum] Molybdenum (Mo) is an element that is solid-soluble in the matrix structure of alloy steel to improve quenching performance and temper softening resistance. Furthermore, molybdenum is combined with carbon to form carbide, thereby producing an effect of improving abrasion resistance and rolling fatigue life. Moreover, molybdenum stabilizes carbide and martensite in the matrix structure, thereby delaying the structure change due to hydrogen and producing an effect of extending the life of each part.

The content of molybdenum is 0.1 to 0.4 mass %, preferably 0.2 to 0.4 mass %. If the content of molybdenum is less than 0.1 mass %, the above-mentioned effect of delaying the structure change is not obtained sufficiently. On the other hand, if the content is more than 0.4 mass %, the toughness of each part is reduced. Furthermore, the cost of the material is increased and the machinability of the material is reduced, whereby the productivity of each part is reduced eventually.

[Content of Nickel] Nickel (Ni) is an element slightly contained in steel at the time of refining and is an element that is effective in improving quenching performance and in stabilizing austenite. Furthermore, toughness is improved by the addition of the element. Hence, the content is preferably 0.01 mass % or more, more preferably 0.06 mass % or more. Furthermore, the content is 0.02 mass % or less. Although the above-mentioned effects are obtained more significantly as the content of nickel is larger, since nickel is expensive and is the cause of increasing the cost of steel, nickel is not added positively, and it is preferable that the content is suppressed within the above-mentioned range.

[Content of Copper] Copper (Cu) is an element slightly contained in steel at the time of refining and is an element that is effective in improving quenching performance and in improving grain boundary strength. Hence, the content is preferably 0.01 mass % or more, more preferably 0.08 mass % or more. Furthermore, the content is 0.20 mass % or less. If the content of copper is more than 0.20 mass %, hot forgeability is reduced; hence, copper is not added positively, and it is preferable that the content is suppressed within the above-mentioned range.

[Content of Sulfur] Since sulfur (S) forms manganese sulfide (MnS) and acts as a sulfide-based nonmetallic inclusion in alloy steel, it is preferable that the content of sulfur in alloy steel is smaller. Hence, the content of sulfur is 0.020 mass % or less, preferably 0.012 mass % or less. However, in the case that processability is required to be improved, the content is preferably 0.001 mass % or more, more preferably 0.008 mass % or more.

[Content of Phosphorus] Since phosphorus (P) segregates in grain boundaries and reduces grain boundary strength and fracture toughness values, it is also preferable that the content of phosphorus is smaller. Hence, the content of phosphorus is 0.020 mass % or less, preferably 0.012 mass % or less. However, in the case that processability is required to be improved, the content is preferably 0.001 mass % or more, more preferably 0.007 mass % or more.

[Content of Oxygen] Oxygen (O) forms oxide-based nonmetallic inclusions, such as oxide aluminum (Al₂O₃), in alloy steel. Since these oxide-based nonmetallic inclusions become the starting points of flaking and adversely affect the rolling fatigue life, it is also preferable that the content of oxygen is smaller. Hence, the content of oxygen is 12 mass ppm or less, preferably 10 mass ppm or less. However, in terms of cost, the content is preferably 1 mass ppm or more, more preferably 3 mass ppm or more, and particularly preferably 7 mass ppm or more.

[Amount of Oxide Inclusions] In the case that large nonmetallic inclusions, such as oxides, sulfides and nitrides, are present in alloy steel, stress concentration occurs around them, and fatigue cracking starting from the inclusions occurs and causes flaking. Furthermore, since hydrogen penetrated into alloy steel is liable to accumulate in the stress concentration portions, the structure change of steel is apt to occur around the large inclusions.

Among the nonmetallic inclusions, oxide inclusions, such as Al₂O₃, MgO and CaO, having a size of 10 µm or more are liable to become the starting points of fatigue cracking. On the other hand, in the case that the size of the oxide inclusions is less than 10 µm, the matrix structure of steel is changed by hydrogen before cracking starting from the inclusions occurs, and fatigue cracking due to this change occurs earlier. For this reason, even if oxide inclusions having a size of less than 10 µm in diameter are present, no problem substantially occurs.

From these viewpoints, in at least one of the inner ring, the outer ring and the rolling elements having the above-mentioned characteristics of the present invention, it is preferable that the number of oxide inclusions having a diameter of 10 µm or more and existing in an area of 320 mm² in an optional cut surface is 10 or less, more preferably 5 or less, to suppress the occurrence of fatigue cracking starting from the oxide inclusions.

For the purpose of suppressing the number of oxide inclusions having a diameter of 10 µm or more in alloy steel, control is possible by using alloy steel originally containing few number of oxide inclusions as a material or by performing the following method. Oxide inclusions, distributed inside a bar steel material being used as a raw material, are mostly distributed around the center portion and the outermost surface portion of the bar steel. Hence, in a hot forging process or a hot rolling process at the time when the inner ring or the outer ring is produced, molding is performed so that the area around the center portion and the area around the outermost surface portion of the bar steel material do not enter the area in the vicinity of the raceway surface of the inner ring or the outer ring, whereby the distribution of the oxide inclusions can be controlled. Furthermore, during turning after the hot forging process or the hot rolling process, the distribution of the oxide inclusions can also be controlled by removing portions corresponding to the area around the center portion and the area around the outermost surface portion of the steel material.

[C+N content and Area Ratio of Carbides on Contact Surface] The C+N content on the surface of each part contacting the counterpart surface during operation, such as the raceway surfaces of the outer ring and the inner ring and the rolling contact surface of the rolling element, is regulated in the range of 0.9 to 1.4 mass %, preferably in the range of 0.9 to 1.2 mass %. In addition, the area ratio of carbides on the surface is regulated to 10% or less, preferably 5% or less.

The amounts of carbon and nitrogen penetrated into alloy steel by performing carburizing treatment or carbonitriding treatment influence the hardness and the amount of retained austenite after quenching and tempering. Furthermore, it is known that since a hydrogen atom is small in diameter, hydrogen moves around in alloy steel; however, an effect of hindering the movement of hydrogen is obtained by making carbon and nitrogen solid-soluble into the matrix structure of the alloy steel.

This kind of effect is not obtained sufficiently if the C+N content is less than 0.9 mass %. On the other hand, if the C+N content is more than 1.4 mass %, the deposition amounts of carbides and nitrides become excessive, and net-like carbides are eventually formed along prior austenite grain boundaries. If these net-like carbides are generated, fatigue cracking occurs and is propagated easily along the carbides, and the toughness is reduced significantly. Furthermore, even in the case that the C+N content is in the range of 0.9 to 1.4 mass %, if the area of the carbides is more than 10%, the toughness is reduced as described above; hence, it is necessary to regulate the area of the carbides in a superimposed manner.

The C+N content can be adjusted by appropriately selecting the content of carbon in alloy steel and the gas concentration and the retaining time inside a furnace in the carburizing treatment or carbonitriding treatment depending on the size of the bearing. With respect to the gas concentration, the details are as follows: the concentration of C is adjusted by controlling the flow rate of hydrocarbon-based gas, such as propane or butane, and the concentration of N is adjusted by controlling the gas flow rate of ammonia. Furthermore, similarly, the area ratio of carbides can also be adjusted by appropriately selecting the gas concentration and the retaining time inside the furnace in the carburizing treatment or the carbonitriding treatment depending on the size of the bearing.

[Depth of 1% of Diameter of Rolling Element from Contact Surface] In the present invention, when the diameter of the rolling element is D, the hardness, the amount of retained austenite, the compressive residual stress and the C+N content at the position of the depth (depth: 0.01D) of 1% of the diameter (D) of the rolling element from the contact surface (raceway surface or rolling contact surface) are regulated because of the following reasons.

In other words, in the rolling bearing, shearing stress is generated inside each part just under the contact surface due to the contact stress between each of the bearing rings (outer ring and inner ring) and the rolling element, and metal fatigue is caused by the shearing stress, resulting in flaking on the contact surface. Since the distribution of the shearing stress is determined depending on the contact stress and the contact area between the bearing ring and the rolling element, the diameter of the rolling element significantly influences the distribution of the shearing stress. Under ordinary operating conditions, the shearing stress becomes maximized at the depth (depth: 0.01D) of approximately 1% of the diameter (D) of the rolling element and flaking occurs starting from the area. It has been clarified that the structure change due to hydrogen is also apt to occur at the position of the depth of 0.01D in which the shearing stress becomes maximized.

For these reasons, the hardness, the amount of retained austenite, the compressive residual stress and the C+N content at the position are regulated as described next.

[Hardness at Position of Depth 0.01D from Contact Surface] Hydrogen moves around in alloy steel, thereby having a property of being liable to accumulate in high stress areas. In particular, since shearing stress becomes maximized at the position of the depth of 0.01D from the contact surface as described above, hydrogen tends to accumulate at the position. As a result of earnest examination in the structure change due to hydrogen, the inventors have found that the structure change due to hydrogen is caused by the occurrence of local plastic deformation and that it is necessary to improve the hardness at the position and to improve the resistance value against the plastic deformation in order to delay the occurrence of the structure change. Furthermore, the inventors have found that the occurrence of the structure change due to hydrogen can be suppressed effectively by regulating the hardness at the position of the depth of 0.01D from the contact surface within the range of 720 to 832 in Hv (Vickers hardness) (61 to 65 in Rockwell hardness HRC), preferably within the range of 759 to 832 in Hv.

In other words, if the hardness is lower than 720 in Hv at the position of the depth of 0.01D from the contact surface, the hardness is insufficient and the occurrence of the structure change due to hydrogen cannot be suppressed sufficiently, and the rolling fatigue life of each part is reduced. On the other hand, if the hardness is more than 832 in Hv, the toughness of each part is reduced.

The hardness at the position can be regulated appropriately by controlling the components of the alloy steel and by controlling the C+N content and quenching and tempering conditions.

In the measurement of the hardness, after the contact surface of each part is cut off, the cut surface is mirror polished, and the hardness of the cut surface after the treatment is measured using a Micro Vickers Hardness Tester.

[Retained Austenite Amount at Position of Depth 0.01D from Contact Surface] The retained austenite in a metal structure is different in crystal structure from the martensite serving as the matrix structure of alloy steel, and the crystal structure thereof has an effect of reducing the diffusion constant of hydrogen. Hence, the retained austenite delays the local accumulation of hydrogen at the position, thereby delaying the occurrence of the structure change at the position. Consequently, the amount of the retained austenite at the position of the depth of 0.01D from the contact surface is regulated within the range of 20 to 45 volume %, preferably in the range of 30 to 45 volume %.

If the amount of the retained austenite at the position is less than 20 volume %, the effect of delaying the structure change is not obtained sufficiently. On the other hand, if the amount of the retained austenite is more than 45 volume %, the dimensional stability of each part is reduced.

The amount of the retained austenite at the position can be regulated appropriately by controlling the components of the alloy steel and by controlling the C+N content and quenching and tempering conditions.

In the measurement of the amount of the retained austenite, after a portion of the contact surface of each part is cut out, the contact surface is subjected to electrolytic polishing, and the contact surface after the treatment is analyzed using an X-ray diffractometer.

[Compressive Residual Stress at Position of Depth 0.01D from Contact Surface] As describe above, the flaking on the contact surface is caused by the occurrence of cracking starting from the structure change due to hydrogen at the position. The compressive residual stress at the position in which hydrogen is liable to accumulate suppresses the occurrence and propagation of the cracking starting from the structure change, thereby having an effect of delaying the occurrence of the structure change due to hydrogen. Consequently, the compressive residual stress at the position of the depth of 0.01D from the contact surface is regulated within the range of 50 to 300 Mpa, preferably within the range of 100 to 260 Mpa.

If the compressive residual stress at the position is less than 50 Mpa, the effect of delaying the structure change is not obtained sufficiently. On the other hand, if the compressive residual stress at the position is more than 300 Mpa, the value of the tensile residual stress generated inside the material is increased so as to be balanced with the compressive residual stress, whereby the progress of the cracking may conversely be accelerated.

The compressive residual stress at the position can be regulated appropriately by controlling the components of the alloy steel and by adjusting carburizing time or carbonitriding time and thereby controlling the inclination of the C+N content in the direction from the surface to the core portion.

In the measurement of the compressive residual stress, after a portion of the contact surface of each part is cut out, the contact surface is subjected to electrolytic polishing, and the contact surface after the treatment is analyzed using an X-ray diffractometer.

[C+N content at the position of the depth of 0.01D from the contact surface] If the solid solution amount of C and N into the matrix structure is large, the strength of the matrix structure is raised and the structure change hardly occurs. Hence, the C+N content at the position of the depth of 0.01D from the contact surface is preferably 0.7 to 1.3 mass %, more preferably 0.8 to 1.2 mass %. If the C+N content at the position of the depth of 0.01D from the contact surface is less than 0.7 mass %, the above-mentioned effect is not obtained. On the other hand, if the C+N content is more than 1.3 mass %, large carbides or nitrides are generated, and stress concentration occurs around them and the structure change is apt to occur.

[Prior Austenite Grain Size at Position of Depth 0.01 D from Contact Surface] The segregation of alloy components and the accumulation of hydrogen are apt to occur at the interfaces of prior austenite grain boundaries. In the case that the prior austenite grain size is uniformly small, the above-mentioned segregation and accumulation are distributed finely and uniformly, whereby the toughness of each part is improved. On the other hand, in the case that the prior austenite grain size is large, the occurrence and propagation of cracking are generated along the interfaces and the toughness of each part is reduced. The larger the prior austenite grain size, the higher the stress concentration, whereby the reduction of the toughness becomes significant.

As describe above, in ordinary operating conditions, the shearing stress becomes maximized at the position of the depth (depth: 0.01D) of 1% of the diameter of the rolling element from the contact surface, and then the shearing stress becomes smaller toward the core portion. However, since a considerably high shearing stress is applied up to the position of the depth (depth: 0.03D) of 3% of the diameter of the rolling element from the contact surface, if large prior austenite grain boundary exists up to this depth, the occurrence and propagation of cracking are generated easily, and the toughness of each part is reduced. Hence, it is necessary to regulate the average value of the prior austenite grain size to 20 µm or less, preferably to 16 µm or less, at the position of the depth of 0.01 to 0.03D from the contact surface. On the other hand, in order that quenching temperature is raised and sufficient hardness is obtained stably, it is preferable that the average value is set to 5 µm or more. From these viewpoints, it is further preferable that the average value of the prior austenite grain size is regulated within the range of 10 to 14 µm.

In addition, in the case that the prior austenite grain size is uniformly small, the structure change due to hydrogen is suppressed effectively. The lowering of the rolling fatigue life of each part is caused by the fact that the structure change is locally accelerated by hydrogen. In other words, in the case that a locally weak portion is present in alloy steel, the structure change is accelerated by hydrogen at the portion, flaking occurs starting from the portion, resulting in the lowering of the rolling fatigue life of each part. Hence, even if the prior austenite grain size is small, in the case that large prior austenite grains are mixed and the uniformity thereof is not sufficient, the structure change due to hydrogen occurs inside the large prior austenite grains or at the grain boundaries thereof, resulting in the lowering of the life of each part. From these viewpoints, the average value of the prior austenite grain size at the position of the depth of 0.01 to 0.03D from the contact surface is regulated to 20 µm or less, and the maximum value of the prior austenite grain size at the position is regulated to 3 times or less the average value, preferably 2.4 times or less the average value.

The prior austenite grain size and the uniformity thereof at the position can be regulated appropriately by controlling the components in the alloy steel and by controlling the heat treatment conditions, in particular, the cooling and retaining conditions during furnace cooling.

The average value of the prior austenite grain size is obtained by observing the area of 1 mm² at the position of the depth of 0.01 to 0.03D from the contact surface and by using the following expression according to JIS G0551: 2005 (Steels-Micrographic Determination of the Apparent Grain Size).

The average value (µm) of the prior austenite grain size = (1/m)^{0.5}·10³
m: the number of crystal grains per mm² as defined in JIS G0551

In addition, the maximum value of the prior austenite grain size is obtained by observing the area of 1 mm² at the position of the depth of 0.01 to 0.03D from the contact surface and by using the following expression.

The maximum value (µm) of the prior austenite grain size = (a·b)^{0.5}
a: the major diameter (µm) of the maximum crystal grain in the observation range
b: the minor diameter (µm) of the maximum crystal grain in the observation range

[Hardness of Core Portion] The hardness at the position (the position where the gradient of the hardness from the surface after the carburizing treatment or the carbonitriding treatment has been lowered fully to a constant value) of the core portion of each part is in the range of 400 to 550 in Hv (40.8 to 52.3 in HRC). If the hardness of the core portion is less than 400 in Hv, the rigidity of each part is reduced. On the other hand, if the hardness is more than 550 in Hv, the toughness of each part is reduced.

The hardness of the core portion can be regulated appropriately by controlling the components of the alloy steel and by controlling the treatment conditions in the quenching and the tempering.

[Surface Roughness of Contact Surface] If the surface roughness of the contact surfaces (raceway surface, rolling contact surface) is rough, oil-film breakage tends to occur, the bearing ring and the rolling element make metal contact with each other at the portion of oil-film breakage, and the decomposition of lubricating oil and the penetration of hydrogen causing the structure change occur easily. Although the surface roughness of the contact surface of the rolling bearing is usually controlled to 0.2 µm or less in arithmetic average roughness (Ra), it is preferable that the maximum peak height (Rp) of the roughness curve thereof is used as the index of the surface roughness in consideration of the easiness of the partial breakage of oil film. In other words, even in the case that the arithmetic average roughness (Ra) at the contact surface is regulated to 0.2 µm or less, if the surface roughness thereof is more than 1.4 µm at the maximum peak height (Rp) of the roughness curve, oil film is broken and partial metal contact is liable to occur. Hence, the maximum peak height (Rp) of the roughness curve is preferably regulated to 1.2 µm or less, more preferably to 1.0 µm or less.

Regulating the surface roughness of the contact surface to 1.4 µm or less at the maximum peak height (Rp) of the roughness curve as described above is attained by optimizing processing conditions, such as the type of a grinding wheel and grinding speed, in grinding processing. The maximum peak height of the roughness curve is obtained by making measurements at 5 to 10 positions in the circumferential direction of the rolling contact surface in the case that the rolling element is a ball and in the axial direction of the rolling contact surface or the raceway surface in the case that the rolling element is a tapered roller or a cylindrical roller and in the case of the outer ring and the inner ring. The processing conditions are then adjusted so that the maximum peak height (Rp) of the roughness curve is 1.4 µm or less.

[Method of Manufacturing Rolling Bearing Part] According to the present invention, the alloy steel containing the above-mentioned alloy components is used for at least one of parts of a rolling bearing and each part made of the alloy steel is subjected to heat treatment as specified below; consequently, the hardness, the amount of retained austenite, the compressive residual stress, the prior austenite grain size and the amount C + N are controlled at the position of the depth of 0.01D from the contact surface, whereby the rolling fatigue life of the part is improved by delaying the structure change due to hydrogen; furthermore, the C+N content and the area ratio of carbides on the contact surface, the prior austenite grain size at the position of the depth of 0.01 to 0.03D from the contact surface, and the hardness of the core portion are controlled, whereby excellent fracture toughness is obtained.

With respect to the method for manufacturing a rolling bearing part according to the present invention, conditions in each process and the critical significance thereof will be described below.

[Carburizing Treatment or Carbonitriding Treatment] In the present invention, a rolling bearing part is subjected to carburizing treatment or carbonitriding treatment in which a temperature of 900 to 980°C, preferably 920 to 960°C, is kept for a given time.

If the treatment temperature is less than 900°C, the diffusion speeds of carbon and nitrogen cannot be obtained sufficiently, and the treatment time is elongated, whereby productivity is impaired. On the other hand, if the treatment temperature is more than 980°C, prior austenite grains are coarsened.

Gas concentrations inside the furnace are adjusted to obtain the optimum C+N content and the optimum area ratio of carbides. More specifically, the concentration of C is adjusted by controlling the flow rate of hydrocarbon-based gas, such as propane or butane, and the concentration of N is adjusted by controlling the flow rate of ammonia gas. Since the gas flow rates for controlling the concentration of C and the concentration of N are affected by heat treatment conditions such as treatment temperature in the carburizing treatment or the carbonitriding treatment, cooling and retaining temperature thereafter and quenching temperature, and also affected by the structure of the furnace (type and size), these conditions are required to be adjusted to optimum conditions appropriately. The carbon potential (CP value) serving as an index indicating in-furnace atmosphere is adjusted to preferably to 0.8 to 1.7, more preferably to 0.9 to 1.5.

With respect to the retaining time, conditions in which the optimum carburizing or carbonitriding depth is obtained are selected depending on the size of the rolling bearing or each part thereof.

[Furnace Cooling Treatment] In the present invention, after the carburizing treatment or the carbonitriding treatment and before the quenching and the tempering, furnace cooling is performed and the in-furnace temperature is lowered to 620 to 700°C, preferably to 640 to 700°C, and the rolling bearing or each part thereof is retained for a predetermined time.

Conventionally, after the carburizing treatment or the carbonitriding treatment, furnace cooling, air cooling or oil cooling was performed, and then the quenching was performed. Furthermore, the quenching temperature is lowered to refine the prior austenite grains; however, if the quenching temperature is lowered excessively, it becomes difficult to obtain the hardness required for the rolling bearing. In addition, through mere adjustment of the quenching temperature, it was difficult to refine the prior austenite grains while obtaining the uniformity of the grains.

As a result of earnest examination in this problem, the inventors have found that the prior austenite grains can be made uniform and fine by carrying out the furnace cooling to perform cooling and retaining treatment. In other words, this treatment is performed to appropriately control the prior austenite grains so that the flaking life is extended by suppressing the structure change due to hydrogen and so that the rolling fatigue life is also extended simultaneously by providing high fracture toughness.

With this treatment, the transformation treatment from austenite to cementite, perlite and ferrite can be completed fully. After the transformation is completed fully, the quenching is performed, whereby the prior austenite grain boundaries and the structure after the quenching can be made uniform. On the other hand, if the treatment is insufficient, part of the structure having not been transformed to cementite, perlite and ferrite is formed into martensite structure, whereby irregularities are formed in the structure after the quenching eventually. The structure having such irregularities is not returned fully to a uniform state even if the quenching for obtaining a single phase area of austenite at a high temperature of 860 to 880°C is performed; as a result, the structure after the quenching becomes an irregular and non-uniform martensite structure in which large austenite grain boundaries are mixed. In the alloy steel having this kind of matrix structure, the occurrence of the structure change starts therefrom and the progress of the structure change tends to be accelerated; as a result, the structure change type flaking life is reduced and this may lead to the lowering of the rolling fatigue life due to the lowering of fracture toughness.

In particular, in comparison with SCR 420 used as general carburized steel, the alloy steel having the components specified in the present invention has high quenching performance and is liable to be transformed to martensite structure during cooling after the carburizing treatment or the carbonitriding treatment; hence, it can be said that the above-mentioned phenomenon occurs easily. In the present invention, since the transformation treatment is completed fully before the quenching, a matrix structure having uniform and refined prior austenite grain boundaries and structure can be obtained after the quenching. For this reason, controlling the prior austenite grain size by performing this treatment is very effective to obtain the rolling bearing according to the present invention.

Even in the case that the treatment temperature is lower than 620°C or higher than 700°C, the time for the treatment becomes long and the productivity is hindered. On the other hand, the retaining time, that is, the time to the completion of the transformation treatment from austenite to cementite, perlite and ferrite differs depending on retaining temperature. For example, in consideration of the unification of the prior austenite grain size, the above-mentioned treatment temperature is preferably 650 to 700°C, and the retaining time in this case is approximately 3 to 10 hours.

After this treatment, the rolling bearing or each part thereof is air-cooled or oil-cooled and is then subjected to the quenching.

[Quenching and Tempering] The quenching is performed by retaining the rolling bearing or each part thereof at a temperature of 840 to 880°C, preferably 860 to 880°C, for a predetermined time and then by performing oil cooling. If the quenching temperature is less than 840°C, the hardness after the quenching becomes insufficient. On the other hand, if the temperature is more than 880°C, the amount of retained austenite becomes excessive or the prior austenite grains are coarsened, and the toughness is reduced. The treatment time is determined depending on the size of the rolling bearing or each part thereof.

Furthermore, the tempering is performed by retaining the rolling bearing or each part thereof at a temperature of 160 to 200°C for a predetermined time and then by performing air cooling or furnace cooling. If the tempering temperature is less than 160°C, the toughness is reduced and the structure of the alloy steel becomes sensitive to hydrogen, and the structure change due to hydrogen is liable to occur. On the other hand, if the temperature is more than 200°C, the amount of the retained austenite is reduced and the effect of delaying the structure change due to hydrogen is not obtained sufficiently. Similarly, the treatment time is determined depending on the size of the rolling bearing or each part thereof.

[Preferable Use of Rolling Bearing according to Invention] Since the rolling bearing according to the present invention has a characteristic in which the structure change type flaking hardly occurs, the rolling bearing is ideally suited as a large rolling bearing in which the diameter (the maximum diameter in the case of a roller) of its rolling element is 30 mm or more. More specifically, the bearing is used to support the rotation shafts of rotating machine apparatuses, such as the main shaft of a power generation wind turbine of a wind power generator and the speed increaser (speed changer) of a wind power generator, and the rotation shafts of rotating machine apparatuses, such as the axles of a construction machine and a speed changer of a construction machine.

In a large rolling bearing in which the diameter of its rolling element is 30 mm or more, typified as in the case of the main shaft of a power generation wind turbine, oil film is hardly formed stably because the contact area between the bearing ring and the rolling element is large, and local metal contact is apt to occur. Consequently, lubricating oil is decomposed and hydrogen is generated, and the generated hydrogen tends to penetrate into the alloy steel forming the bearing ring and the rolling element.

In addition, in such a use in which the direction of the torque exerted to a rotation shaft for supporting a mechanism for transmitting power via gears, such as a speed changer of a wind power generator or a construction machine, is changed momentarily regardless of the size of the rolling bearing, a large slip occurs between the rolling element and the bearing ring, lubricating film is likely to be broken and metal contact is liable to occur. Consequently, in a similar way, lubricating oil is decomposed and hydrogen is generated, and the generated hydrogen tends to penetrate into the alloy steel forming the bearing ring and the rolling element.

Similarly, even in such a use in which the rotation direction of a rotation shaft is changed frequently as in the case of the axle of a construction machine, the lubricating film between the rolling element and the bearing ring is likely to be broken and metal contact is liable to occur; consequently, lubricating oil is decomposed and hydrogen is generated, and the generated hydrogen tends to penetrate into the alloy steel forming the bearing ring and the rolling element.

### Examples

The present invention will be further described below with reference to examples, but the range of the present invention is not limited to these examples.

[Examples 1 to 15 and Comparative Examples 1 to 21] First, Charpy test pieces and the inner rings of the ball bearings 6317 were made using the kinds of steel shown in Table 1, and the Charpy test pieces were used to conduct a test for evaluating the toughness of the test pieces (Examples 1 to 6 and Comparative Examples 1 to 7), and the ball bearings 6317 were used to conduct a test for evaluating the rolling lives of the bearings (Examples 7 to 15 and Comparative Examples 8 to 21).

**[Table 1]**

| | | Alloy Components (mass %) | | | | | | * mass ppm only for O | | | |
|---|---|---|---|---|---|---|---|---|---|---|---|
| | Steel Type | C | Si | Mn | Cr | Mo | Ni | Cu | S | P | O (ppm) |
| Example | A | 0.20 | 0.46 | 1.20 | 2.80 | 0.40 | 0.08 | 0.13 | 0.010 | 0.011 | 8 |
| | B | 0.17 | 0.41 | 0.60 | 3.23 | 0.32 | 0.09 | 0.20 | 0.010 | 0.010 | 7 |
| | C | 0.16 | 0.48 | 0.20 | 4.00 | 0.40 | 0.20 | 0.13 | 0.011 | 0.020 | 12 |
| | D | 0.30 | 0.33 | 0.52 | 4.50 | 0.25 | 0.13 | 0.11 | 0.008 | 0.009 | 7 |
| | E | 0.22 | 0.50 | 0.35 | 3.19 | 0.10 | 0.06 | 0.13 | 0.020 | 0.013 | 9 |
| | F | 0.10 | 0.32 | 0.51 | 3.07 | 0.40 | 0.07 | 0.08 | 0.016 | 0.012 | 10 |
| | G | 0.23 | 0.20 | 0.24 | 2.60 | 0.20 | 0.08 | 0.11 | 0.011 | 0.014 | 9 |
| | H | 0.28 | 0.31 | 0.82 | 3.50 | 0.20 | 0.12 | 0.15 | 0.012 | 0.012 | 10 |
| Comp. Example | I | 0.21 | 0.41 | 0.30 | 3.00 | 0.25 | 0.03 | 0.11 | 0.010 | 0.010 | 20 |
| | J | 0.18 | 0.53 | 0.33 | 3.05 | 0.19 | 0.12 | 0.09 | 0.011 | 0.008 | 9 |
| | K | 0.22 | 0.42 | 1.26 | 4.95 | 0.25 | 0.08 | 0.17 | 0.012 | 0.013 | 7 |
| | L | 0.08 | 0.38 | 0.41 | 2.50 | 0.21 | 0.12 | 0.12 | 0.009 | 0.015 | 11 |
| | M | 0.22 | 0.16 | 0.18 | 4.11 | 0.22 | 0.13 | 0.05 | 0.008 | 0.009 | 12 |
| | N | 0.38 | 0.39 | 0.40 | 3.50 | 0.09 | 0.07 | 0.09 | 0.011 | 0.012 | 6 |
| | O | 0.18 | 0.25 | 0.41 | 1.50 | 0.45 | 0.03 | 0.10 | 0.015 | 0.011 | 9 |
| | P | 1.03 | 0.28 | 0.38 | 1.54 | 0.01 | 0.09 | 0.14 | 0.008 | 0.011 | 8 |

[Toughness Evaluation Test] The Charpy test pieces were cut into shape by turning and then heat-treated. More specifically, the test pieces were retained at the temperatures respectively shown in Table 2 for 14 hours to perform the carburizing treatment or the carbonitriding treatment. With respect to the gas concentration at the time, except for Comparative Examples 5 and 6, in the carburizing treatment, the flow rate of propane was set to 0.015 m³/h, and in the carbonitriding treatment, the flow rate of propane was set to 0.015 m³/h and the flow rate of ammonia was set to 0.1 m³/h. In the carburizing treatment in Comparative Example 5, the flow rate of propane was set to 0.025 m³/h. In the carburizing treatment in comparison example 6, the flow rate of propane was set to 0.020 m³/h. After the treatment, the test pieces, except for Comparative Example 2, were retained at the temperatures respectively shown in Table 2 for 10 hours and then furnace-cooling to the room temperature. In Comparative Example 2, the test piece was furnace-cooled to the room temperature immediately after the carburizing treatment.

Furthermore, as the quenching, the test pieces were retained at the temperatures respectively shown in Table 2 for 1.5 hours and then oil-cooled to the room temperature; and as the tempering, the test pieces were retained at 180°C for 2 hours and then air-cooled to the room temperature. After the heat treatment, the test pieces were subjected to grinding and finishing, whereby Charpy test pieces measuring 10 mm x 10 mm x 55 mm with a 10 RC notch were obtained.

Table 2 shows the steel type, the heat treatment conditions and the measurement results of heat treatment quality for the Charpy test pieces prepared and also shows the test results of the Charpy impact test. The Charpy impact test was conducted on the basis of JIS Z2242: 2005.

**[Table 2]**

| | | Alloy Components (mass %) | | | | | | * mass ppm only for O | | | |
|---|---|---|---|---|---|---|---|---|---|---|---|
| | Steel Type | C | Si | Mn | Cr | Mo | Ni | Cu | S | P | O (ppm) |
| Example | A | 0.20 | 0.46 | 1.20 | 2.80 | 0.40 | 0.08 | 0.13 | 0.010 | 0.011 | 8 |
| | B | 0.17 | 0.41 | 0.60 | 3.23 | 0.32 | 0.09 | 0.20 | 0.010 | 0.010 | 7 |
| | C | 0.16 | 0.48 | 0.20 | 4.00 | 0.40 | 0.20 | 0.13 | 0.011 | 0.020 | 12 |
| | D | 0.30 | 0.33 | 0.52 | 4.50 | 0.25 | 0.13 | 0.11 | 0.008 | 0.009 | 7 |
| | E | 0.22 | 0.50 | 0.35 | 3.19 | 0.10 | 0.06 | 0.13 | 0.020 | 0.013 | 9 |
| | F | 0.10 | 0.32 | 0.51 | 3.07 | 0.40 | 0.07 | 0.08 | 0.016 | 0.012 | 10 |
| | G | 0.23 | 0.20 | 0.24 | 2.60 | 0.20 | 0.08 | 0.11 | 0.011 | 0.014 | 9 |
| | H | 0.28 | 0.31 | 0.82 | 3.50 | 0.20 | 0.12 | 0.15 | 0.012 | 0.012 | 10 |
| Comp. Example | I | 0.21 | 0.41 | 0.30 | 3.00 | 0.25 | 0.03 | 0.11 | 0.010 | 0.010 | 20 |
| | J | 0.18 | 0.53 | 0.33 | 3.05 | 0.19 | 0.12 | 0.09 | 0.011 | 0.008 | 9 |
| | K | 0.22 | 0.42 | 1.26 | 4.95 | 0.25 | 0.08 | 0.17 | 0.012 | 0.013 | 7 |
| | L | 0.08 | 0.38 | 0.41 | 2.50 | 0.21 | 0.12 | 0.12 | 0.009 | 0.015 | 11 |
| | M | 0.22 | 0.16 | 0.18 | 4.11 | 0.22 | 0.13 | 0.05 | 0.008 | 0.009 | 12 |
| | N | 0.38 | 0.39 | 0.40 | 3.50 | 0.09 | 0.07 | 0.09 | 0.011 | 0.012 | 6 |
| | O | 0.18 | 0.25 | 0.41 | 1.50 | 0.45 | 0.03 | 0.10 | 0.015 | 0.011 | 9 |
| | P | 1.03 | 0.28 | 0.38 | 1.54 | 0.01 | 0.09 | 0.14 | 0.008 | 0.011 | 8 |

In Examples 1 to 6, the Charpy test pieces have been prepared using the alloy steel having components specified in the present invention. Since the heat treatment conditions were within the ranges specified in the present invention, the C+N content and the area ratio of carbides on the surface of each test piece, the average value of the prior austenite grain size at the depth of 0.3 to 0.9 mm from the surface of each test piece, the ratio (the maximum value/the average value) of the maximum value to the average value, and the Vickers hardness at the depth of 5 mm from the surface of each test piece were all within the ranges specified in the present invention. The Charpy impact values were high, 40 J/cm² or more, and the test pieces were excellent in toughness.

The position at the above-mentioned depth of 0.3 to 0.9 mm corresponds to the position at the depth of 0.01 to 0.03D from the contact surface in the case that the diameter (D) of the rolling element is 30.2 mm. Furthermore, the position at the above-mentioned depth of 5 mm corresponds to the core portion that is an area in which the gradient of the hardness from the surface has been lowered fully to a constant value.

On the other hand, in all of Comparative Examples 1 to 7, the test pieces were low in the Charpy impact values and inferior in toughness in comparison with Examples. The reasons for this are assumed to be as described below. That is to say, in Comparative Example 1, since the carburizing temperature was too high, the prior austenite grain size was large. In Comparative Example 2, cooling and retaining was not performed after the carburizing treatment; in Comparative Example 3, the cooling and retaining temperature after the carburizing treatment was too low; in Comparative Example 4, the cooling and retaining temperature after the carburizing treatment was too high, whereby the transformation from austenite to cementite, perlite and ferrite was not completed fully and martensite structure was observed in portions of the structure before the quenching. Consequently, in Comparative Examples 2 and 3, after the quenching, a structure in which large prior austenite grains were mixed was obtained, and the prior austenite grain size became large. Furthermore, in Comparative Example 4, although the prior austenite grain size was small, a structure in which large prior austenite grains were mixed was obtained after the quenching.

Moreover, in Comparative Examples 5 and 6, the gas concentration in the carburizing treatment was not appropriate; in Comparative Example 5, both the C+N content and the area ratio of carbides on the surface were excessive; and in Comparative Example 6, although the C+N content on the surface was appropriate, the area ratio of carbides was excessive. Still further, in Comparative Example 7, since the composition of the alloy steel was outside the range of the present invention, the hardness of the core portion was excessive.

[Rolling Life Evaluation Test using Ball Bearing 6317] In this evaluation test, since the inner ring is liable to cause flaking, the inner ring was used as a target to which the present invention is applied. In other words, as the roller bearings to be subjected to this test, only the inner rings of the ball bearings 6317 were made of the kinds of steel shown in Table 1, and the outer rings and the balls thereof were made of JIS-SUJ2, except for Comparative Example 18. In Comparative Example 18, the inner ring was also made of JIS-SUJ2, for comparison.

Each steel material was cut into a predetermined size and subjected to hot-rolling, spheroidizing annealing and turning to obtain the shape of the ball bearing 6317, and then subjected to heat treatment. More specifically, as the carburizing treatment or the carbonitriding treatment, the parts were retained for 14 hours at the temperatures respectively shown in Table 3. With respect to the gas concentration at the time, in the carburizing treatment, the flow rate of propane was set to 0.015 m³/h, and in the carbonitriding treatment, the flow rate of propane was set to 0.015 m³/h and the flow rate of ammonia was set to 0.1 m³/h, except for Comparative Example 21. In the carburizing treatment in Comparative Example 21, the flow rate of propane was set to 0.03 m³/h. Then, the parts were retained for 10 hours at the temperatures respectively shown in Table 3 and then furnace-cooled to the room temperature, except for Comparative Example 8. In Comparative Example 8, after the carburizing treatment, the parts were immediately furnace-cooled to the room temperature. In Comparative Example 18, the parts were not subjected to the carburizing treatment including subsequent cooling and retaining.

Furthermore, as the quenching, the parts were retained at the temperatures respectively shown in Table 3 for 1.5 hours and then oil-cooled to the room temperature, and as the tempering, the parts were retained at the temperatures respectively shown in Table 3 for 2 hours and then air-cooled to the room temperature. After the heat treatment, the parts were subjected to grinding and finishing; in the end, the inner ring, the outer ring, the rolling elements and the retainer attached thereto were assembled to obtain a ball bearing 6317 measuring 85 mm in inside diameter, 180 mm in outside diameter, 41 mm in width and 30.2 mm in ball diameter. The thickness of the inner ring was 14.75 mm, and the distance between the deepest portion of the raceway groove and the inner circumferential surface of the inner ring was 8.67 mm.

The rolling life evaluation test was conducted at a radial load of 53.2 kN and a rotation speed of 2000 min⁻¹ by using high traction oil (transmission-use synthetic oil) as a lubricant. Three samples were made for each part and were subjected to the test, and the average life thereof was obtained.

Table 3 shows the steel type, the heat treatment conditions and the measurement results of heat treatment quality for the inner rings and also shows the test results of the rolling life test. The life ratios shown in Table 3 are the average life ratios of the ball bearings 6317 of Examples and Comparative Examples in the case that the average life of the ball bearing 6317 incorporating the inner ring made of JIS-SUJ2 in Comparative Example 18 is 1.0. Furthermore, in this test, in bearings having caused flaking, the flaking occurred on all the inner rings thereof, and white structures were observed on the flaked portions thereof.

**[Table 3]**

| | Heat Treatment Conditions | | | | | | | Raceway Surface | | Position at Depth of 0.01D from Raceway Surface | | | Position at Depth of 0.01 to 0.03D from Raceway Surface | | Core | Test Results | |
|---|---|---|---|---|---|---|---|---|---|---|---|---|---|---|---|---|---|
| | No. | Steel Type | Treatment | Carburizing Temp. (°C) | Cool and Retain Temp. (°C) | Quenching Temp. (°C) | Tempering Temp. (°C) | C+N Cont. (%) | Carbide Area Ratio (%) | Hardness (Hv) | Retained Austenite (Vol. %) | Comp. Residual Stress (Mpa) | Average Prior Austenite Grain Size (µm) | Max/ Average of Prior Austenite Grain Size | Core Hardness (Hv) | Life Ratio | Presence of Structure Change |
| Example | 7 | A | Carburizing | 980 | 680 | 880 | 160 | 1.1 | 1 | 800 | 45 | 220 | 12 | 2.2 | 531 | 5 ≤ | None |
| | 8 | B | Carbonitriding | 940 | 660 | 860 | 160 | 1.4 | 10 | 830 | 38 | 260 | 14 | 2.6 | 434 | 5 ≤ | None |
| | 9 | C | Carburizing | 960 | 620 | 860 | 180 | 1.0 | 3 | 745 | 30 | 300 | 14 | 2.3 | 402 | 5 ≤ | Present |
| | 10 | D | Carburizing | 980 | 700 | 880 | 180 | 1.2 | 4 | 724 | 32 | 160 | 20 | 2.0 | 550 | 5 ≤ | Present |
| | 11 | E | Carbonitriding | 960 | 640 | 860 | 160 | 1.0 | 2 | 811 | 25 | 50 | 10 | 3.0 | 501 | 5 ≤ | Present |
| | 12 | F | Carburizing | 960 | 680 | 860 | 200 | 0.9 | 1 | 721 | 30 | 120 | 16 | 2.2 | 418 | 5 ≤ | Present |
| | 13 | G | Carburizing | 900 | 680 | 860 | 160 | 1.0 | 2 | 766 | 21 | 220 | 12 | 2.2 | 500 | 5 ≤ | Present |
| | 14 | H | Carburizing | 960 | 700 | 860 | 160 | 0.9 | 1 | 760 | 30 | 100 | 5 | 2.4 | 522 | 5 ≤ | None |
| | 15 | H | Carburizing | 920 | 640 | 880 | 180 | 1.2 | 5 | 795 | 42 | 210 | 16 | 2.4 | 545 | 5 ≤ | None |
| Comp. Example | 8 | A | Carburizing | 980 | No Retaining | 860 | 180 | 1.1 | 1 | 780 | 25 | 150 | 35 | 2.1 | 531 | 3.8 | Present |
| | 9 | A | Carburizing | 960 | 600 | 860 | 180 | 1.4 | 7 | 765 | 29 | 200 | 25 | 2.9 | 537 | 4.1 | Present |
| | 10 | A | Carbonitriding | 940 | 720 | 880 | 180 | 1.3 | 2 | 754 | 30 | 210 | 18 | 3.3 | 536 | 4.0 | Present |
| | 11 | I | Carbonitriding | 960 | 660 | 860 | 180 | 1.3 | 2 | 800 | 29 | 165 | 12 | 2.5 | 465 | 1.9 | Present |
| | 12 | J | Carburizing | 960 | 660 | 860 | 160 | 0.7 | 0 | 668 | 7 | 20 | 10 | 2.3 | 485 | 0.8 | Present |
| | 13 | K | Carburizing | 960 | 660 | 880 | 160 | 0.9 | 0 | 720 | 20 | 40 | 14 | 2.3 | 520 | 1.4 | Present |
| | 14 | L | Carburizing | 960 | 680 | 860 | 180 | 1.1 | 3 | 721 | 23 | 60 | 14 | 2.4 | 355 | 1.5 | Present |
| | 15 | M | Carbonitriding | 960 | 680 | 860 | 160 | 1.2 | 3 | 813 | 21 | 260 | 12 | 2.0 | 530 | 1.7 | Present |
| | 16 | N | Carburizing | 960 | 640 | 860 | 160 | 1.4 | 11 | 840 | 30 | 210 | 12 | 2.1 | 650 | 1.4 | Present |
| | 17 | O | Carburizing | 960 | 620 | 860 | 180 | 1.3 | 7 | 794 | 25 | 170 | 12 | 2.1 | 554 | 1.3 | Present |
| | 18 | P | - | - | - | 840 | 180 | 1.0 | 1 | 740 | 10 | 5 | 16 | 2.3 | 745 | 1.0 | Present |
| | 19 | E | Carburizing | 960 | 680 | 860 | 240 | 0.9 | 1 | 740 | 18 | 80 | 10 | 2.2 | 400 | 1.2 | Present |
| | 20 | E | Carburizing | 960 | 660 | 900 | 160 | 1.0 | 1 | 810 | 48 | 100 | 20 | 2.9 | 510 | 5 ≤ | Present |
| | 21 | E | Carburizing | 960 | 660 | 860 | 180 | 1.8 | 20 | 830 | 43 | 350 | 12 | 2.5 | 465 | 1.8 | Present |

In Examples 7 to 15, all the inner rings have been made using the alloy steels having the components specified in the present invention. Since the heat treatment conditions were within the ranges specified in the present invention, the Vickers hardness, the amount of retained austenite, the compressive residual stress at the position of the depth of 0.01D from the raceway surface, and the ratio (the maximum value/the average value) of the maximum value to the average value of the prior austenite grain size at the position of the depth of 0.01 to 0.03D from the raceway surface were all within the ranges specified in the present invention. In addition, the C+N content and the area ratio of carbides on the raceway surface and the Vickers hardness at the position (core portion) of the depth of 4 mm from the raceway surface were all within the ranges specified in the present invention. Hence, in all the roller bearings, the lives were extended five or more times in comparison with the standard roller bearing of Comparative Example 18, and flaking did not occur.

In particular, in Examples 7, 8, 14 and 15, the components of the alloy steels forming the inner rings are set within further preferable ranges. Hence, the effect of delaying the structure change due to hydrogen is particularly excellent, and no structure change occurred in the observation of the metal structure of the cross section of each inner ring after the test. In the rolling ball bearing in each of Examples, flaking did not occur and the test was terminated in the middle; according to the results of this observation, it is assumed that the lives of the rolling ball bearings of Examples 7, 8, 14 and 15 are longer than those of Examples 9 to 13.

On the other hand, the rolling lives of the ball bearings of Comparative Examples 8 to 21 were shorter than those of Examples 7 to 15, and the progress of the structure change due to hydrogen was observed in the observation of the metal structure in the cross section of each inner ring after the test. The reasons for this are respectively assumed to be as described below.

That is to say, in Comparative Example 8, cooling and retaining was not performed after the carburizing treatment; in Comparative Example 9, the cooling and retaining temperature after the carburizing treatment was too low; and in Comparative Example 10, the cooling and retaining temperature after the carburizing treatment was too high; for these reasons, the transformation from austenite to cementite, perlite and ferrite was not completed fully and martensite structure was observed in portions of the structure before the quenching. Consequently, in Comparative Examples 8 and 9, after the quenching, a structure in which large prior austenite grains were mixed was obtained, and the prior austenite grain size became large. Furthermore, in Comparative Example 10, although the prior austenite grain size was small, a structure in which large prior austenite grains were mixed was obtained after the quenching.

Furthermore, in Comparative Examples 11 to 17, the components of the alloy steels forming the inner rings are outside the ranges of the present invention. In other words, in Comparative Example 11, since the amount of O was outside the range, cleanliness was insufficient, and it is assumed that flaking occurred staring from oxide inclusions. Moreover, in Comparative Example 12, the amount of Si was outside the range, and in Comparative Example 13, the amount of Mn and the amount of Cr were the outside the ranges; for these reasons, the carburizability was not sufficient, the heat treatment quality at the position of the depth of 0.01D from the raceway surface was not sufficient, and it is assumed that the structure change due to hydrogen was liable to occur. Still further, in Comparative Example 14, the amount of C and the amount of Cr were outside the ranges; in Comparative Example 15, the amount of Si and the amount of Mn were outside the ranges; in Comparative Example 16, the amount of Mo was outside the range; and in Comparative Example 17, the amount of Cr was outside the range; for these reasons, it is assumed that the effect of delaying the structure change due to hydrogen was not obtained sufficiently.

Comparative Example 18 is the standard rolling bearing made of JIS-SUJ2, and the amount of C, the amount of Cr and the amount of Mo were outside the ranges, whereby the amount of retained austenite and the compressive residual stress at the position of the depth of 0.10D from the raceway surface were not sufficient, and it is assumed that the effect of delaying the structure change due to hydrogen was not obtained sufficiently. In addition, since immersion-quenched steel was used, the hardness of the core portion was excessive, thereby being inferior in toughness.

In Comparative Example 19, since the tempering temperature was high, the amount of retained austenite at the position of the depth of 0.10D from the raceway surface was insufficient, and it is assumed that the hydrogen brittleness resistance thereof was not sufficient. On the other hand, in Comparative Example 20, since the quenching temperature was high, the amount of retained austenite at the position of the depth of 0.10D from the raceway surface is excessive. Hence, although the life of the bearing is long in this test, the bearing is not suited for a long time use in view of dimensional stability.

In Comparative Example 21, since the gas concentration in the carburizing treatment was not appropriate, the C+N content on the raceway surface was excessive, and it is assumed that the compressive residual stress at the position of the depth of 0.10D from the raceway surface was outside the range specified in the present invention and the progress of cracking was accelerated.

[Examples 16 to 21 and Comparative Example 22] Next, for the purpose of examining the elongation of the life under more severe conditions, such as high surface pressure and high rotation speed, as in the case of the high-speed shaft of a speed changer, the kinds of steel shown in Table 4 were used, the inner rings of the ball bearings 6206 were made, and a test for evaluating the rolling lives thereof was conducted.

**[Table 4]**

| | Steel Type | Alloy Components (mass %) | | | | | | * mass ppm only for O | | | | Number of Inclusions |
|---|---|---|---|---|---|---|---|---|---|---|---|---|
| | | C | Si | Mn | Cr | Mo | Ni | Cu | S | P | O (ppm) | |
| Example | Q | 0.21 | 0.45 | 1.00 | 3.00 | 0.30 | 0.08 | 0.13 | 0.010 | 0.012 | 10 | 10 |
| | R | 0.25 | 0.46 | 1.01 | 3.02 | 0.30 | 0.07 | 0.11 | 0.010 | 0.012 | 10 | 12 |
| Comp. Example | P | 1.03 | 0.28 | 0.38 | 1.54 | 0.01 | 0.09 | 0.14 | 0.008 | 0.011 | 8 | 7 |

[Rolling Life Evaluation Test using Ball Bearing 6206] Also in this evaluation test, the inner ring was used as a target to which the present invention was applied, and only the inner rings of the ball bearings 6206 were made of the kinds of steel shown in Table 4, and the outer rings and the balls thereof were made of JIS-SUJ2, except for Comparative Example 22. In Comparative Example 22, the inner ring was also made of J1S-SUJ2, for comparison.

Each steel material was cut into a predetermined size and subjected to turning to obtain the shape of the ball bearing 6206, and then subjected to heat treatment. More specifically, as the carburizing treatment or the carbonitriding treatment, the parts were retained for 5 hours at the temperatures respectively shown in Table 5. With respect to the gas concentration at the time, in the carburizing treatment, the flow rate of propane was set to 0.015 m³/h, and in the carbonitriding treatment, the flow rate of propane was set to 0.015 m³/h and the flow rate of ammonia was set to 0.1 m³/h. Then, the parts were retained for 10 hours at the temperatures respectively shown in Table 5 and then furnace-cooled to the room temperature. In Comparative Example 22, the parts were not subjected to the carburizing treatment including subsequent cooling and retaining.

Furthermore, as the quenching, the parts were retained at the temperatures respectively shown in Table 5 for 1.5 hours and then oil-cooled to the room temperature, and as the tempering, the parts were retained at the temperatures respectively shown in Table 5 for 2 hours and then air-cooled to the room temperature. After the heat treatment, the parts were subjected to grinding and finishing; in the end, the inner ring, the outer ring, the rolling elements and the retainer attached thereto were assembled to obtain a ball bearing 6206 measuring 30 mm in inside diameter, 62 mm in outside diameter, 16 mm in width and 9.5 mm in ball diameter. The thickness of the inner ring was 5.35 mm, and the distance between the deepest portion of the raceway groove and the inner circumferential surface of the inner ring was 3.49 mm. In all of Examples and Comparative Examples, grinding was performed under the conditions that the surface roughness of the raceway surface is 0.2 µm or less in the arithmetic average roughness (Ra) and that the value of the maximum peak height (Rp) of the roughness curve, shown in Table 5, is obtained.

The rolling life evaluation test was conducted at a radial load of 13.8 kN and a rotation speed of 3000 min⁻¹ by using high traction oil (transmission-use synthetic oil) as a lubricant. Three samples were made for each part and were subjected to the test, and the average life thereof was obtained.

Table 5 shows the steel type, the heat treatment conditions and the measurement results of heat treatment quality for the inner rings and also shows the test results of the rolling life test. The life ratios shown in Table 5 are the average life ratios of the ball bearings 6206 of Examples and Comparative Examples in the case that the average life of the ball bearing 6206 incorporating the inner ring made of JIS-SUJ2 in Comparative Example 22 is 1.0. Furthermore, in this test, in bearings having caused flaking, the flaking occurred on all the inner rings thereof, and white structures were observed on the flaked portions thereof.

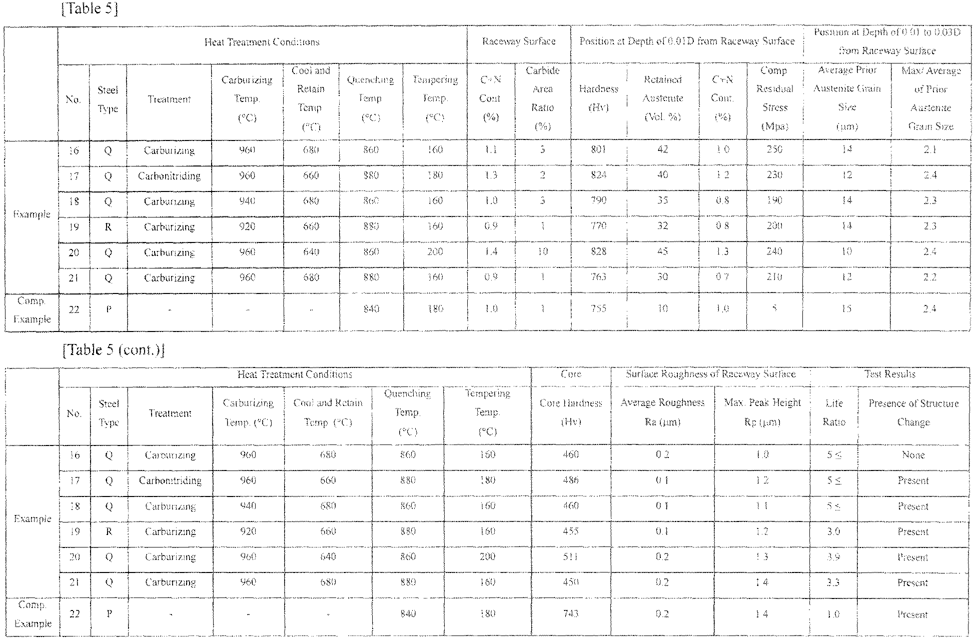

In Examples 16 to 21, all the inner rings have been made using the alloy steels having the components specified in the present invention. Since the heat treatment conditions were within the ranges specified in the present invention, the Vickers hardness, the amount of retained austenite, the compressive residual stress at the position of the depth of 0.01D from the raceway surface, and the ratio (the maximum value/the average value) of the maximum value to the average value of the prior austenite grain size at the position of the depth of 0.01 to 0.03D from the raceway surface were all within the ranges specified in the present invention. In addition, the C+N content and the area ratio of carbides on the raceway surface and the Vickers hardness at the position (core portion) of the depth of 1.7 mm from the raceway surface were all within the ranges specified in the present invention. Hence, in all the roller bearings, the lives were extended three or more times in comparison with the standard roller bearing of Comparative Example 22.

In particular, in Examples 16 to 18, alloy steel in which the number of oxide inclusions having a diameter of 10 µm or more and existing in an area of 320 mm² is 10 or less was used as a material, the C+N content at the position of the depth of 0.10D from the raceway surface was 1.2 mass % or less, and the maximum peak height (Rp) of the roughness curve was 1.2 µm or less, whereby these values were respectively controlled within the preferable ranges; consequently, the life was long under relatively high surface pressure and relatively high rotation speed conditions, the life was extended five times or more, and flaking did not occur.

Furthermore, in Example 16, since the maximum peak height (Rp) of the roughness curve on the rolling surface was 1.0 µm or less, it is assumed that the penetration of hydrogen due to oil-film breakage was able to be suppressed under the severe conditions. Hence, the effect of delaying the structure change due to hydrogen is particularly excellent, and no structure change occurred in the observation of the metal structure of the cross section of the inner ring after the test. In the rolling ball bearing in each of Examples 16 to 18, flaking did not occur and the test was terminated in the middle; according to the results of this observation, it is assumed that the life of the rolling ball bearing of Example 16 is longer than those of Examples 17 and 18.

### Industrial Applicability

The rolling bearing according to the present invention has excellent fracture toughness while the structure change due to hydrogen is suppressed even under conditions in which hydrogen penetrates easily, whereby the rolling fatigue life thereof can be improved. For this reason, the rolling bearing according to the present invention is ideally suited as a rolling bearing for use in supporting, for example, the main shafts of wind power generators or rotation shafts of speed changers, construction machines and industrial robots, in which rolling bearings having relatively large sizes and incorporating rolling elements requiring high toughness and having a diameter of 30 mm or more are used and lubricating oil is used as a lubricant.

However, the present invention is not limited to these uses but can be widely applied to rolling bearings for various uses, furthermore being widely applied not only to deep groove radial ball bearings but also to radial and axial types of ball bearings, tapered roller bearings, cylindrical roller bearings, spherical rolling bearings, etc.

This application is based on Japanese Patent Application No. 2011-266535 filed on December 6, 2011, the content of which is incorporated herein by reference.

## Claims

1. A rolling bearing comprising an inner ring, an outer ring and rolling elements provided therebetween in a rollable manner,
wherein at least one of the inner ring, the outer ring and the rolling elements is made of an alloy steel containing:
0.10 to 0.30 mass % of C, 0.2 to 0.5 mass % of Si, 0.2 to 1.2 mass % of Mn, 2.6 to 4.5 mass % of Cr, 0.1 to 0.4 mass % of Mo, 0.20 mass % or less of Ni, 0.20 mass % or less of Cu, 0.020 mass % or less of S, 0.020 mass % or less of P, and 12 mass ppm or less of O, the balance being Fe and inevitable impurities,
a surface thereof is carburized or carbonitrided, and C+N content on the surface that contacts a counterpart surface during operation is 0.9 to 1.4 mass %,
an area ratio of carbide on the contact surface is 10% or less,
at a depth of 1% of the diameter of the rolling element from the contact surface, the hardness is 720 to 832 in Hv, an amount of retained austenite is 20 to 45 volume %, and compressive residual stress is 50 to 300 Mpa,
at a depth of 1 to 3% of the diameter of the rolling element from the contact surface, an average value of prior austenite grain size is 20 µm or less, and the maximum value of the prior austenite grain size is 3 times or less the average value, and
the hardness of a core portion is 400 to 550 in Hv.

2. The rolling bearing according to claim 1, wherein, in the at least one of the inner ring, the outer ring and the rolling elements, the number of oxide inclusions having a diameter of 10 µm or more and existing in an area of 320 mm² in a cut surface is 10 or less.

3. The rolling bearing according to claim 1 or 2, wherein C+N content at the depth of 1% of the diameter of the rolling element from the contact surface is 0.7 to 1.3 mass %.

4. The rolling bearing according to any one of claims 1 to 3, wherein the surface roughness of the contact surface is 1.4 µm or less at the maximum peak height Rp of the roughness curve of the surface.

5. The rolling bearing according to any one of claims 1 to 4, wherein the diameter of the rolling element is 30 mm or more.

6. A method of manufacturing a rolling bearing part, the rolling bearing having an inner ring, an outer ring and rolling elements provided therebetween in a rollable manner, and the rolling bearing part being at least one of the inner ring, the outer ring and the rolling elements, the method comprising:
using, as an alloy steel forming the rolling bearing part, an alloy steel containing:
0.10 to 0.30 mass % of C, 0.2 to 0.5 mass % of Si, 0.2 to 1.2 mass % of Mn, 2.6 to 4.5 mass % of Cr, 0.1 to 0.4 mass % of Mo, 0.20 mass % or less of Ni, 0.20 mass % or less of Cu, 0.020 mass % or less of S, 0.020 mass % or less of P, and 12 mass ppm or less of O, the balance being Fe and inevitable impurities,
carburizing or carbonitriding the rolling bearing part at a temperature of 900 to 980°C for a predetermined time;
after the carburizing or the carbonitriding, furnace-cooling the rolling bearing part and retaining at a temperature of 620 to 700°C for a predetermined time; and
quenching and tempering the rolling bearing part,
whereby C+N content on a surface of the rolling bearing part contacting a counterpart surface during operation is 0.9 to 1.4 mass %, an area ratio of carbide on the contact surface is 10% or less, and an amount of retained austenite is 20 to 45 volume % at a depth of 1% of the diameter of the rolling element from the contact surface.

7. The method of manufacturing the rolling bearing part according to claim 6, wherein the CP value inside a furnace during the carburizing or the carburizing is preferably 0.8 to 1.7.
